## Europäisches Patentamt

## European Patent Office

## Office européen des brevets

(11) Veröffentlichungsnummer: **0 107 750**
**B1**

(12) # EUROPÄISCHE PATENTSCHRIFT

(45) Veröffentlichungstag der Patentschrift:
23.07.86

(51) Int. Cl.⁴: **A 01 K 9/00**

(21) Anmeldenummer: **83104165.2**

(22) Anmeldetag: **28.04.83**

(54) **Tränkeautomat.**

(30) Priorität: **05.10.82  CH 5831/82**

(43) Veröffentlichungstag der Anmeldung:
**09.05.84 Patentblatt 84/19**

(45) Bekanntmachung des Hinweises auf die Patenterteilung:
**23.07.86 Patentblatt 86/30**

(84) Benannte Vertragsstaaten:
**AT BE CH DE FR GB IT LI NL**

(56) Entgegenhaltungen:
**DE-B-2 719 954**
**DE-U-8 118 392**
**DE-U-8 121 026**

(73) Patentinhaber: **Fritz Marti AG, Dufourstrasse 73, St. Gallen (CH)**

(72) Erfinder: **Schweiss, Hugo, Neuchlenstrasse 32, CH-9202 Gossau (CH)**

(74) Vertreter: **Engelhardt, Guido, Dipl.- Ing., Montafonstrasse 35 Postfach 1350, D-7990 Friedrichshafen 1 (DE)**

LIBER, STOCKHOLM 1986

## Beschreibung

Die Erfindung bezieht sich auf einen Tränkeautomat für Säugetiere, insbesondere für Kälber und Schafe, mit einem Mixer zur Aufbereitung eines flüssigen Futtermittels, beispielsweise von Milch, das in diesem aus einem Vorratsbehälter dosiert zugegebenen pulverförmigen Nährmittelkonzentrat und einer erwärmten Flüssigkeit gemischt wird und einer Saugstelle zuführbar ist.

Derartige Tränkeautomaten sind bekannt und haben sich in der Praxis auch bewährt. Als Flüssigkeit, in der Milchpulver gelöst wird, wird hierbei ausschließlich Wasser verwendet, das in einem dem Mixer vorgeschalteten elektrisch beheizten Warmwasserboiler (DE-U-81 18 392 und DE-U-81 21 026) oder mittels Tauchsiedern (DE-B-11 30 222) erhitzt wird. Andere Flüssigkeiten sind auf diese Weise nicht zu erwärmen, da vor allem Eiweißstoffe bei den erforderlichen Temperaturen an den Heizelementen anbrennen und verkrusten. Abgesehen von den unumgänglichen, mit großem Aufwand durchzuführenden Reinigungsarbeiten und dem schlechten Wirkungsgrad aufgrund der Isolation der Heizelemente können durch die Wärmeeinwirkung auch Veränderungen eintreten, indem Schadstoffe gebildet werden, die zu schweren Verdauungsstörungen führen können. Zum Erwärmen von nährmittelhaltigen Flüssigkeiten sind daher die bekannten elektrisch beheizten Einrichtungen nur mit großen Nachteilen verwendbar.

Aufgabe der Erfindung ist es daher, einen Tränkeautomaten der vorgenannten Gattung zu schaffen, mittels dem nicht nur Wasser,sondern auch fett- und eiweißhaltige Flüssigkeiten, wie z. B. Milch in den unterschiedlichen Erscheinungsformen, ohne Schwierigkeiten in kurzer Zeit zu erhitzen sind, ohne daß diese mit den Heizelementen unmittelbar in Berührung kommen und somit verbrennen können und daß vor allem das Milcheiweiß durch die Erwärmung nicht beeinträchtigt wird. Es soll vielmehr erreicht werden, daß der Tränkeautomat in vielseitiger Weise, insbesondere zum Erhitzen von nährmittelhaltigen Flüssigkeiten verwendbar ist, so daß diese bei einfacher Handhabung und ohne großen Bauaufwand bei der Aufzucht und zur Mast von Kälbern verfüttert werden kann und demnach durch Zugabe eines Nährmittelkonzentrates ein hochwertiges, durch Nährstoffe angereichertes Futtermittel problemlos an einer Saugstelle aufzubereiten ist.

Gemäß der Erfindung wird dies dadurch erreicht, daß zur Erwärmung der dem Mixer des Tränkeautomaten zuzuführenden Flüssigkeit ein Microwellen-Heizgerät vorgesehen ist.

Sehr zweckmäßig ist es hierbei, das Microwellen-Heizgerät als vorzugsweise einen achsparallel zu dem Mixer angeordneten Durchlauferhitzer auszubilden.

Das Microwellen-Heizgerät ist in einfacher Ausgestaltung aus einem oder mehreren an einen Hochfrequenzgenerator angeschlossenen Hohlleiter und einer von der zu erwärmenden Flüssigkeit durchströmten an dessen freiem Ende angeordneten Patrone zu bilden, wobei die Hohlleiter jeweils aus einem horizontal angeordneten Ring mit rechteckigem oder kreisförmigem Querschnitt bestehen können, in den gegenüberliegend zu dem Hochfrequenzgenerator die Patrone mit vertikal verlaufender Längsachse eingesetzt ist. Um die Heizleistung zu steigern, können zwei oder mehrere die von der zu erwärmenden Flüssigkeit durchströmten Patrone aufnehmende Hohlleiter vertikal übereinander angeordnet werden.

Um den Hochfrequenzgenerator zu kühlen, kann diesem jeweils ein thermostatisch steuerbarer Kühlventilator zugeordnet werden.

Die Patrone sollte, damit eine stets zufriedenstellende Erwärmung gewährleistet ist, mit einer in deren unteren Bereich mündenden Einführungsleitung und einer in deren oberen Bereich vorgesehenen Austragsleitungversehen sein, wobei die Einführungsleitung und/oder die Austragsleitung in einfacher Weise durch in die Patrone ragende, vorzugsweise in einem auf diese aufschraubbaren Verschlußdeckel gehaltene Rohre gebildet werden können.

Angebracht ist es ferner, die Patrone mit einem in diese ragenden, vorzugsweise an dem Verschlußdeckel befestigten Temperaturfühler zu versehen, zylindrisch auszubilden und aus Kunststoff herzustellen.

Des weiteren ist es vorteilhaft, um eine kontinuierliche Futtermittelaufbereitung sicherzustellen, dem Microwellen-Heizgerät die zu erwärmende Flüssigkeit aus einem Vorratsbehältnis mittels einer in Abhängigkeit von dem Flüssigkeitsstand in dem Mixer des Tränkeautomaten einschaltbaren Pumpe zuzuführen.

Mittels des gemäß der Erfindung ausgebildeten Tränkeautomaten ist es auf einfache Weise möglich, fett- und eiweißhaltige Flüssigkeiten zu erhitzen und in diesen ein Nährmittelkonzentrat aufzulösen, so daß ein durch Nährstoffe angereichertes Futtermittel aufzubereiten ist, ohne daß das in der Flüssigkeit enthaltene Milcheiweiß, Kohlehydrate oder andere Bestandteile durch die Erwärmung beeinträchtigt werden und daß durch Anbrennen und/oder Verkrusten Betriebsstörungen und vor allem bei den Tieren Verdauungsstörungen auftreten. Wird nämlich zur Erwärmung der Flüssigkeit ein vorzugsweise als Durchlauferhitzer ausgebildetes Microwellen-Heizgerät vorgesehen, so ist es möglich, jedwede Flüssigkeit und somit auch die in unterschiedlichen Zustandsformen vorhandene Milch durch elektromagnetische Wellen aufzuheizen. Rückstände in der erwärmten Flüssigkeit werden auf diese Weise zuverlässig vermieden, auch entsteht keine Nachwärme, vielmehr ist die vorgegebene Temperatur in einem engen Toleranzbereich einzuhalten. Bei einfacher Handhabung wird somit erreicht, daß auch fett- und eiweißhaltige Flüssigkeiten verfüttert werden können und daß durch Zugabe eines Nährmittelkozentrates in kurzer Zeit und ohne daß ein großer Wartungsaufwand notwendig ist, an der Verbrauchsstelle ein zur Aufzucht von Kälbern und Schafen sowie zur Kälbermast geeignetes hochwertiges, mit Nährstoffen angereichertes Futtermittel aufzubereiten ist.

In der Zeichnung ist ein Ausführungsbeispiel des gemäß der Erfindung ausgebildeten Tränkeautomaten dargestellt, das nachfolgend im einzelnen erläutert ist. Hierbei zeigt:

Fig. 1 den Tränkeautomaten in schematischer Darstellung,

Fig. 2 das bei dem Tränkeautomaten nach Fig. 1 vorgesehene Microwellen-Heizgerät mit zugeordneter Patrone, in Seitenansicht,

Fig. 3 einen Schnitt nach der Linie III - III der Fig. 2 und

Fig. 4 eine Draufsicht auf das Microwellen-Heizgerät nach Fig. 1 mit aufgedecktem Hochfrequenzgenerator.

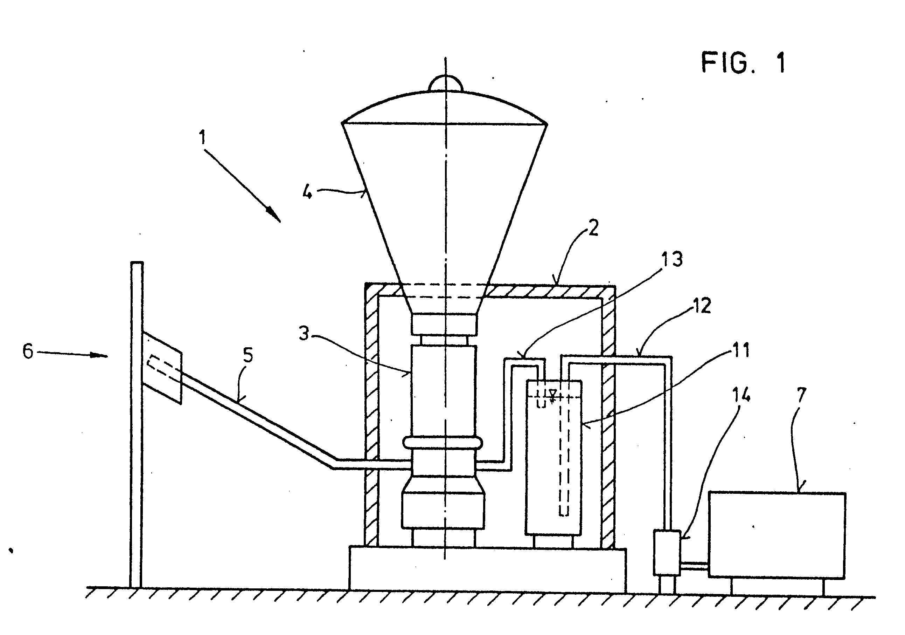

Der in Fig. 1 dargestellte und mit 1 bezeichnete Tränkeautomat dient zur Aufbereitung eines flüssigen Futtermittels und besteht im wesentlichen aus einem in einem Gehäuse 2 angeordneten Mixer 3, einem auf diesen aufgesetzten Vorratsbehälter 4, in dem das dem Mixer 3 dosiert zuzuführende pulverförmige Nährmittelkonzentrat enthalten ist, sowie einem Heizgerät 11, aus dem über eine Leitung 13 eine wählbare erwärmte Flüssigkeitsmenge in den Mixer 3 überströmt. An diesen ist ferner über eine Saugleitung 5 eine Saugstelle 6 angeschlossen, an der das aufbereitete Futtermittel verbraucht wird.

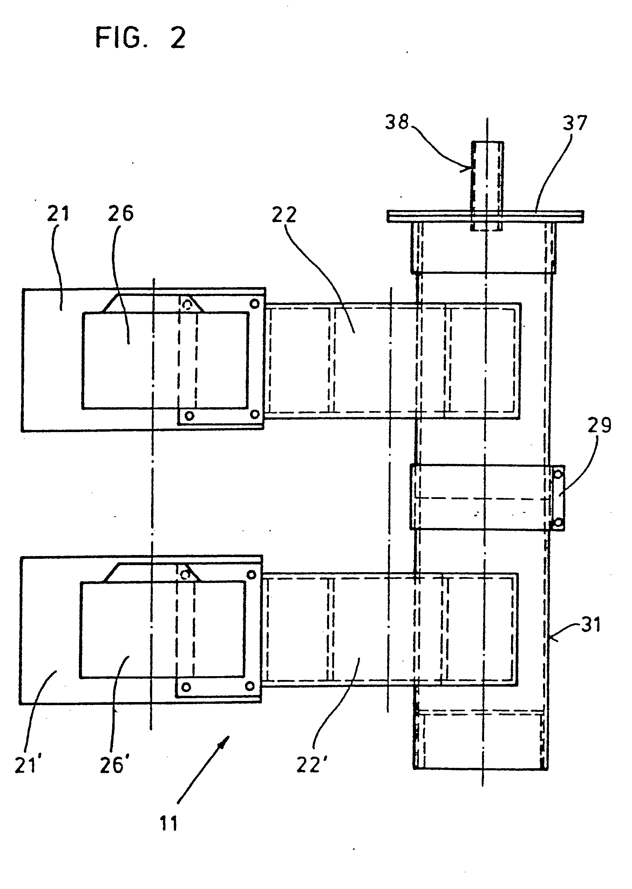

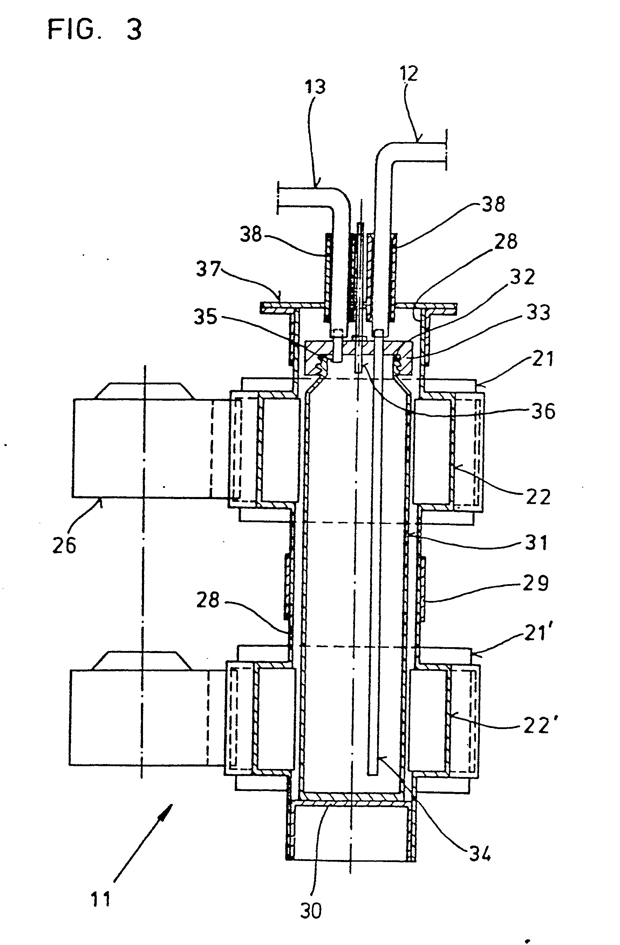

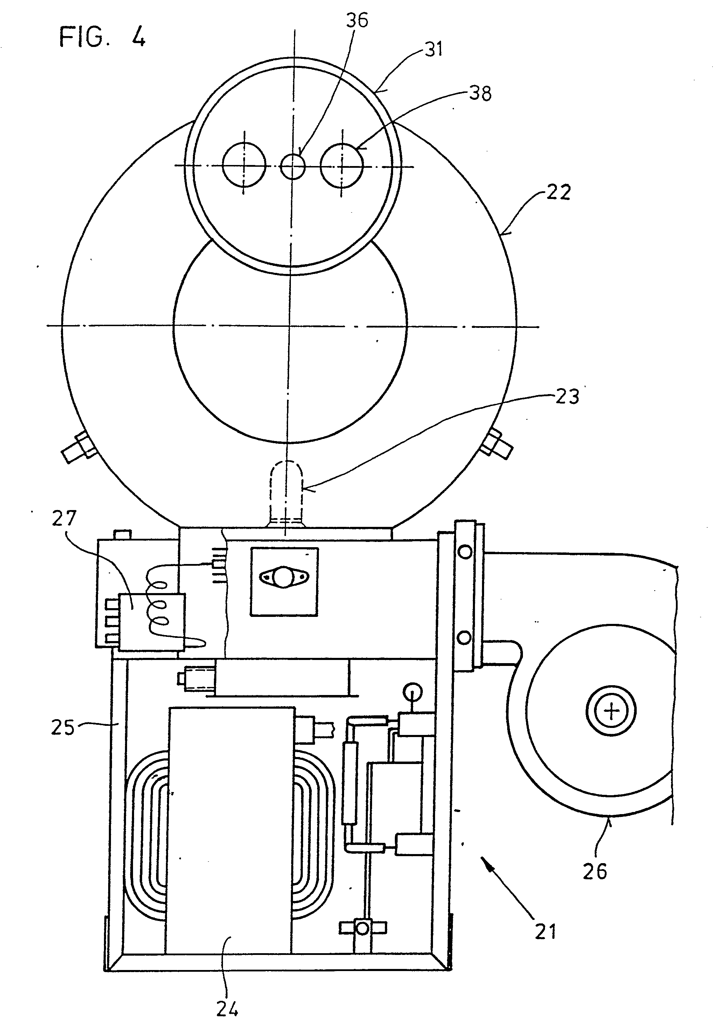

Das Heizgerät 11, dem die zu erwärmende Flüssigkeit aus einem Vorratstank 7 über eine Leitung 12 mit Hilfe einer Pumpe 14 zugeführt wird, ist, wie dies den Fig. 2 bis 4 zu entnehmen ist, als Microwellen-Heizgerät ausgebildet.

Mittels zweier vertikal übereinander angeordneter Hochfrequenzgeneratoren 21 und 21' werden hierbei elektromagnetische Wellen erzeugt, die über rechteckig ausgebildete Hohlleiter 22 und 22' der zu erwärmenden Flüssigkeit zugeführt werden, die sich in einer zylinderförmigen Patrone 31 befindet. Die Hochfrequenzgeneratoren 21 bzw. 21' bestehen jeweils aus einem in einem Gehäuse 25 eingesetzten Magnetron 23, einem Transformator 24 sowie den weiteren erforderlichen, im einzelnen aber nicht bezeichneten elektrischen Bauteilen. Außerdem ist dem Hochfrequenzgenerator 21 bzw. 21' ein Kühlventilator 26 bzw. 26' zugeordnet, der mittels eines Thermostates 27 schaltbar ist.

Die Patrone 31, die auf der dem Hochfrequenzgenerator 21 bzw. 21' gegenüberliegenden Seite in die ringförmig ausgebildeten Hohlleiter 22 bzw. 22' eingesetzt ist, besteht aus Kunststoff und ist durch einen auf das Außengewinde 32 aufgeschraubten Deckel 33 verschlossen. Durch den Deckel 33 sind eine Einführungsleitung 34, die im unteren Bereich der Patrone 31 mündet, sowie eine Austragsleitung 35, die in deren oberen Bereich vorgesehen ist, hindurchgeführt. Außerdem wird der Verschlußdeckel 33 von einem Temperaturfühler 36, der an ein nicht gezeigtes Steuergerät angeschlossen ist, durchgriffen.

Um zur Steigerung der Heizleistung 2, einen, wie dies dargestellt ist, oder mehreren Hochfrequenzgeneratoren 21 und 21' leicht aneinanderkoppeln zu können, sind die Hohlleiter 22 und 22' mit Flanschen 28 versehen, die mittels einer Lasche 29 fest miteinander verbunden sind. Außerdem ist zwischen den Flansch des unteren Hohlleiters 22' ein Boden 30 eingesetzt, auf dem die Patrone 31 abgestützt ist, und auf den Flansch des oberen Hohlleiters 22 ist ein Deckel 37 aufgesetzt, der mit Führungsrohren 38 zur Halterung der Leitungen 12 und 13 versehen ist.

Die von unten nach oben die Patrone 31 durchströmende Flüssigkeit, die dieser mit Hilfe der Pumpe 14 aus dem Vorratstank 7 in Abhängigkeit von dem Flüssigkeitsstand in dem Mixer 3 des Tränkeautomaten 1 zugeführt wird, wird von den elektromagnetischen Wellen, die von den Hochfrequenzgeneratoren 21 und 21' erzeugt werden, erwärmt, ohne daß diese somit mit einem Heizelement in Berührung kommt. In dem Microwellen-Heizgerät 11 können demnach auch fett- und eiweißhaltige Nährflüssigkeiten erwärmt und nachfolgend kann in diesen ein pulverförmiges Nährmittelkonzentrat gelöst werden, ohne daß bei der Erwärmung, die exakt einzuhalten ist, die in der Flüssigkeit enthaltenen Bestandteile ungünstig beeinträchtigt werden und ohne daß sich Rückstände bilden. Der Tränkeautomat 1 ist daher in besonderer Weise zur Aufbereitung eines flüssigen mit Nährstoffen angereicherten Futtermittels aus Milch, und zwar aus Frisch-, Butter-, Mager- oder Vollmilch verwendbar.

**Patentansprüche**

1. Tränkeautomat (1) fur Säugetiere, insbesondere für Kälber und Schafe mit einem Mixer (3) zur Aufbereitung eines flüssigen Futtermittels, beispielsweise von Milch das in diesem aus einem Vorratsbehälter (4) dosiert zugegebenen pulverförmigen Nährmittelkonzentrat und einer erwärmten Flüssigkeit gemischt wird und einer Saugstelle (6) zuführbar ist,
dadurch gekennzeichnet,
daß zur Erwärmung der dem Mixer (3) des Tränkeautomaten (1) zuzuführenden Flüssigkeit ein Microwellen-Heizgerät (11) vorgesehen ist.

2. Tränkeautomat nach Anspruch 1,
dadurch gekennzeichnet,
daß das Microwellen-Heizgerät (11) als vorzugsweise achsparallel zu dem Mixer (3) angeordneter Durchlauferhitzer ausgebildet ist.

3. Tränkeautomat nach Anspruch 1 oder 2,
dadurch gekennzeichnet,
daß das Microwellen-Heizgerät (11) aus einem oder mehreren an einen Hochfrequenzgenerator (21) angeschlossenen Hohlleiter (22) und einer von der zu erwärmenden Flüssigkeit durchströmten an dessen freiem Ende angeordneten Patrone (31) gebildet ist.

4. Tränkeautomat nach Anspruch 3,
dadurch gekennzeichnet,
daß die Hohlleiter (22) jeweils als horizontal angeordneter Ring mit rechteckigem oder kreisförmigem Querschnitt ausgebildet sind, in den gegenüberliegend zu dem Hochfrequenzgenerator (21) die Patrone (31) mit vertikal verlaufender Längsachse eingesetzt ist.

5. Tränkeautomat nach Anspruch 4,
dadurch gekennzeichnet,
daß zwei oder mehrere jeweils die von der zu erwärmenden Flüssigkeit durchströmten Patrone (31) aufnehmende Hohlleiter (22, 22') vertikal übereinander angeordnet sind.

6. Tränkeautomat nach einem oder mehreren der Ansprüche 3 bis 5,
dadurch gekennzeichnet,
daß dem Hochfrequenzgenerator (21, 21') jeweils ein thermostatisch steuerbarer Kühlventilator (26, 26') zugeordnet ist.

7. Tränkeautomat nach einem oder mehreren der Ansprüche 3 bis 6,
dadurch gekennzeichnet,
daß die Patrone (31) mit einer in deren unteren Bereich mündenden Einführungsleitung (34) und einer in deren oberen Bereich vorgesehenen Austragsleitung (35) versehen ist.

8. Tränkeautomat nach Anspruch 7,
dadurch gekennzeichnet,
daß die Einführungsleitung (34) und/oder die Austragsleitung (35) durch in die Patrone (31) ragende, vorzugsweise in einem auf diese aufschraubbaren Verschlußdeckel (33) gehaltene Rohre gebildet sind.

9. Tränkeautomat nach einem oder mehreren der Ansprüche 3 bis 8,
dadurch gekennzeichnet,
daß die Patrone (31) mit einem in diese ragenden, vorzugsweise an dem Verschlußdeckel (33) befestigten Temperaturfühler (36) versehen ist.

10. Tränkeautomat nach einem oder mehreren der Ansprüche 3 bis 9,
dadurch gekennzeichnet,
daß die Patrone (31) zylindrisch ausgebildet und aus Kunststoff hergestellt ist.

11. Tränkeautomat nach einem oder mehreren der Ansprüche 1 bis 10,
dadurch gekennzeichnet,
daß dem Microwellen-Heizgerät (11) die zu erwärmende Flüssigkeit aus einem Vorratsbehältnis (7) mittels einer in Abhängigkeit von dem Flüssigkeitsstand in dem Mixer (3) des Tränkeautomaten (1) einschaltbaren Pumpe (14) zuführbar ist.

**Claims**

Automatic watering apparatus (1) for mammals, particularly for calfs and sheep having a mixer (3) to prepare liquid feeding, for example milk, which feeding is mixed in the mixer from a pulverous foodstuff concentrate dispensed from a store container (4) and a warmed up liquid and fed to a suction station, characterized in that there is provided a microwave heater (11) to warm up the liquid to be fed to the mixer (3) of the automatic watering apparatus (1).

2. Automatic watering apparatus of claim 1, characterized in that the microwave heater (11) is preferably designed as a continous heater the axis of which is oriented parallel to the mixer (3).

3. Automatic watering apparatus of claim 1 or 2, characterized in that the microwave heater (11) is made from one or more hollow waveguides (22) connected to a high frequency generator (21) and a cartridge (31) through which the liquid to be warmed up is flowing which cartridge is connected to the free end of the waveguide.

4. Automatic watering apparatus of claim 3, characterized in that the waveguides (22) are designed as a horizontally oriented ring respectively with rectangular or circular cross-section into which ring the cartridge (31) having a vertically oriented longitudinal axis is inserted opposite to the high frequency generator (21).

5. Automatic watering apparatus of claim 4, characterized in that two or more hollow waveguides (22, 22') connected to the cartridge (31) through which the liquid to be warmed up is flowing are located vertically one upon the other.

6. Automatic watering apparatus of one or more of the claims 3 through 5, characterized in that each of the high frequency generators (21, 21') respectively comprise a thermostatically controllable cooling fan (26, 26').

7. Automatic watering apparatus of one or more of the claims 3 through 6, characterized in that the cartridge (31) is equipped with a supply line (34) connected to the lower area and a drain line (35) connected to the upper area.

8. Automatic watering apparatus of claim 7, characterized in that the supply line (34) and/or the drain line (35) are formed by pipes projecting into the cartridge (31) and are held preferably by a cover (33) screwable on the cartridge.

9. Automatic watering apparatus of one or more of the claims 3 through 8, characterized in that the cartridge (31) is equipped with a thermostat (36) projecting into the cartridge and mounted to the cover (33).

10. Automatic watering apparatus of one or more of the claims 3 through 9, characterized in that the cartridge (31) has a cylindrical shape and is made from plastic material.

11. Automatic watering apparatus of one or more of the claims 1 through 10, characterized in that the liquid to be warmed up is supplied to the microwave heater (11) from a tank (7) by means of a pump (14) acting dependend from the liquid level in the mixer (3) of the automatic watering apparatus (1).

## Revendication

1. Abreuvoir automatique (1) pour mammifères, en particulier pour veaux et moutons, avec un mélangeur (3) pour la préparation d'aliments liquides, par exemple de lait, dans lequel, à partir d'un réservoir (4) est mélangé le concentré alimentaire poudreux, dosé et le liquide chauffé, qui est amené à un point de succion,
ainsi désigné,
de sorte que pour le chauffage du liquide amené, il est prévu un appareil de chauffage à micro-ondes (11) pour le mélangeur (3) des abreuvoirs automatiques (1).

2. Abreuvoir automatique selon la spécification 1,
ainsi désigné,
de sorte que l'appareil de chauffage à micro-ondes (11) est conçu comme chauffe-eau à chauffage instantané disposé de préférence parallèlement à l'axe du mélangeur (3).

3. Abreuvoir automatique, selon la spécification 1 ou 2,
ainsi désigné,
de sorte que l'appareil de chauffage à micro-ondes (11) est constitué à partir d'un ou plusieurs guides diélectriques (22) raccordés à un générateur à haute fréquence (21) ainsi que d'un chargeur (31) disposé à l'extrémité libre de celui-ci, traversant le liquide à chauffer.

4. Abreuvoir automatique, selon la spécification 3,
ainsi désigné,
de sorte que les guides diélectriques (22) sont conçus en tant que couronne disposée horizontalement avec section rectangulaire ou circulaire dans laquelle est insérée le chargeur (31) avec l'axe longitudinal se développant verticalement à l'opposé du générateur haute fréquence (21).

5. Abreuvoir automatique, selon la spécification 4,
ainsi désigné,
de sorte que deux ou plusieurs guides diélectriques (22, 22') absorbant le chargeur (31) traversés par le liquide à chauffer soient disposés verticalement l'un au dessus de l'autre.

6. Abreuvoir automatique, selon une ou plusieurs des spécifications 3 à 5,
ainsi désigné, de sorte qu'il soit attribué un ventilateur à commande thermostatique (26, 26') au générateur haute-fréquence (21, 21').

7. Abreuvoir automatique, selon une ou plusieurs des spécificetions 3 à 6,
ainsi désigné,
de sorte que le chargeur (31) soit équipé d'une conduite d'introduction (34) débouchant dans la partie inférieure et d'une conduite d'évacuation (35) prévue dans la partie supérieure.

8. Abreuvoir automatique, selon la spécification 7,
ainsi désigné,
de sorte que la conduite d'introduction (34) et/ou la conduite d'évacuation (35) soient formées par les tubes maintenus dans le chargeur (31) dépassant de préférence dans un couvercle (33) vissable sur celui-ci.

9. Abreuvoir automatique, selon une ou plusieurs des spécifications 3 à 8,
ainsi désigné,
de sorte que le chargeur (31) soit muni d'un capteur de température (36) fixé de préférence perpendiculairement sur le couvercle (33).

10. Abreuvoir automatique, selon une ou plusieurs des spécifications 3 à 9,
ainsi désigné,
de sorte que le chargeur (31) soit conçu cylindriquement et fabriqué en matière synthétique.

11. Abreuvoir automatique, selon une ou plusieurs des spécifications 1 à 10,
ainsi désigné,
de sorte que le liquide à réchauffer par l'appareil de chauffage à micro-ondes (11) soit dirigé, au moyen d'une pompe (14), dans le mélangeur (3) de l'abreuvoir automatique (1), se déclenchant en fonction de l'état du liquide, à partir du réservoir (7).

FIG. 1

0 107 750

FIG. 2

3

FIG. 3

FIG. 4